Europäisches Patentamt

European Patent Office

Office européen des brevets

(11) Publication number: **0 258 553**
**A2**

# EUROPEAN PATENT APPLICATION

(21) Application number: **87108834.0**

(51) Int. Cl.⁴: **G06F 15/20**

(22) Date of filing: **19.06.87**

(30) Priority: **20.06.86 JP 145803/86**

(43) Date of publication of application:
**09.03.88 Bulletin 88/10**

(84) Designated Contracting States:
**DE FR GB**

(71) Applicant: **MITSUBISHI DENKI KABUSHIKI KAISHA**
**2-3, Marunouchi 2-chome Chiyoda-ku Tokyo 100(JP)**

(72) Inventor: **Ozawa, Junichiro Mitsubishi Denki Power and Ind. Sys.Center 1-2, Wadasakicho 1-chome Hyogo-ku Kobe-shi Hyogo(JP)**
Inventor: **Nakano, Shigeki Mitsubishi Denki Power and Ind. Sys.Center 1-2, Wadasakicho 1-chome Hyogo-ku Kobe-shi Hyogo(JP)**
Inventor: **Inoue, Shozo Mitsubishi Denki Power and Ind. Sys.Center 1-2, Wadasakicho 1-chome Hyogo-ku Kobe-shi Hyogo(JP)**
Inventor: **Tanaka, Takayuki Mitsubishi Denki Power and Ind. Sys.Center 1-2, Wadasakicho 1-chome Hyogo-ku Kobe-shi Hyogo(JP)**
Inventor: **Maeda, Kazuo Mitsubishi Denki Central Res. Lab 1-1, Tsukaguchi Honmachi 8-chome Amagasaki-shi Hyogo(JP)**

(74) Representative: **Eisenführ & Speiser**
**Martinistrasse 24**
**D-2800 Bremen 1(DE)**

(54) **Knowledge-based apparatus for troubleshooting employing image for use in plant.**

(57) A system for tracing a fault for use in a plant based on expert knowledge of specialized technology in various plants such as power plants, chemical plants, manufacturing factories, and steel and iron plants is disclosed which takes inference steps for troubleshooting by means of a computer including a knowledge base in which such expert knowledge is turned to software as well as an inference engine. In the system, data required for the inference process such as layout of the installation in each portion of the plant, internal construction and systems connections of each installation, and diagnostic menus are stored as image data in its image data reproduction device and, in response to outputs of the computer, necessary images are taken out from the reproduction device to be displayed on the display device of the type of a television receiver, and further, character data in which items of question as a result of the inference process developed by the computer are expressed in the form of sentence are displayed superimposed on the above mentioned image display by its superimposer. There is provided a touch sensor panel disposed in front of the image display, whereby it is adapted such that an answer to the

question made by the computer is provided by a touch of the fingertip of the operator on the portion of the touch sensor panel corresponding to the character data based on the inference operations in progress superimposed on a certain region of the image display, and thus, the troubleshooting in the plant is executed in an interactive manner.

# FIG. 3

# KNOWLEDGE-BASED APPARATUS FOR TROUBLESHOOTING EMPLOYING IMAGE FOR USE IN PLANT

## BACKGROUND OF THE INVENTION

### Field of the Invention:

The present invention relates to a system for troubleshooting for use in various plants such as power, chemical, machine, and steel plants and more particularly to an apparatus for troubleshooting using a computer provided with a knowledge base in which technical knowledge based on experiences of experts in special technical field is stored and is enabled by operating a touch panel to trace a fault in the plant of such special technical field.

### Description of the Prior Art:

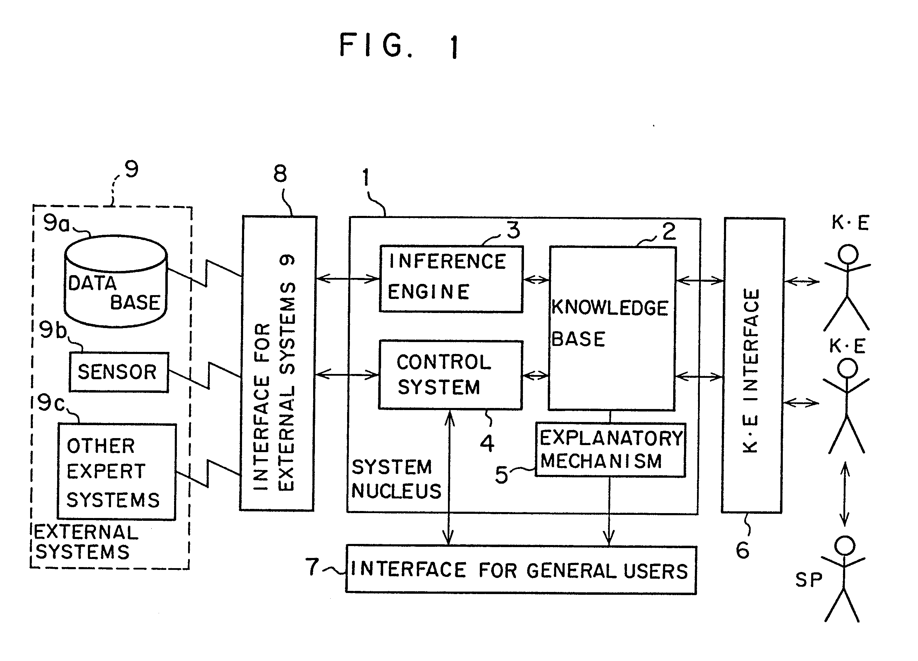

With the recent development of the computer technology, machines and control systems in various industries have come to be mounted with artificial intelligence, hereinafter to be called "AI", and as a result, unskilled persons have come to be enabled to enter into the fields that require special technical knowledge. The mainstream in the technology making use of AI at the present time is called an expert system in which know-how of experts is turned into a knowledge base, and thereby, an amateur is enabled by simple operations to enter into the fields that are highly specialized such as operating a control. The expert system is defined by Professor Edward Feigenbaum of Stanford University as "an intelligent program to solve a problem solution of which requires human skill by knowledge and inference process". A system of the expert system is constructed for example as shown in Fig. 1. That is, a system nucleus 1 includes a knowledge base 2, inference engine 3, control system 4, and an explanatory mechanism 5. The system nucleus 1 is connected to an interface 6 for knowledge engineers (hereinafter a K•E interface) for operation by specialists or intelligent technical experts, an interface 7 for general users, and an interface 8 for external systems 9 such as a database 9a, a sensor 9b, and other expert systems 9c. The knowledge base 2 is a database in which knowledge from experts is stated utilizing a production system, a frame type or blackboard type method, or analogous method for describing knowledge and the inference is advanced using the knowledge base 2 by means of the inference engine 3.

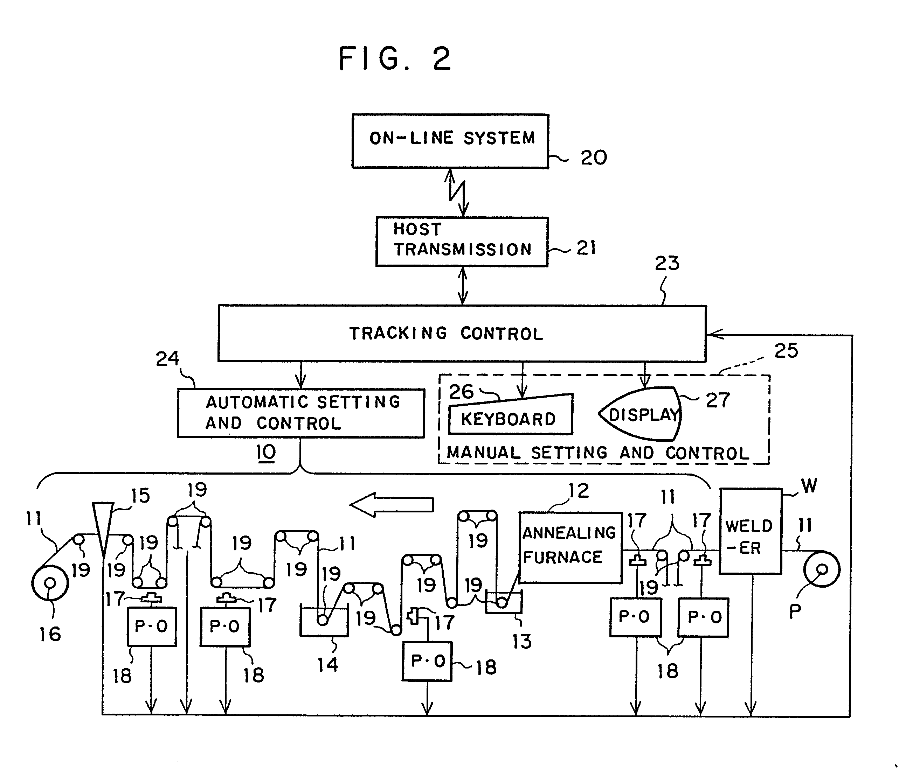

As an instance of the system using such an expert system for troubleshooting in a plant, there is an art published in NIKKEI MECHANICAL, issued on June 16, 1986. This prior art expert system for diagnostic purpose for use in a large plant is that applied to a molten zinc coating process in a steel plant as shown in Fig. 2. Referring to Fig. 2, in the molten zinc coating process 10, steel plates delivered from a pay-off reel P are welded together into a steel plate 11 by a welder W so as to be continuously supplied to the line. The same is annealed in an annealing furnace 12, subjected to coating and rust preventive treatment in a coating station 13 and a rustproof station 14, and finally cut by a cutting machine 15 and taken up on a tension reel 16. The entire length of this molten zinc coating line is as long as 200 m. The roll is formed of steel plates welded together, each in a unit length of several meters, and therefore, it exhibits a slight and subtle change in width and thickness at each seam. Therefore, the computer controlling the process must keep tracking on the positions of the seams thereby to adjust the contents of the processing in the processing equipment to the varying width and thickness. The seam is detected by sensing holes made in the roll with a number of light sensors 17 ... disposed along the line so that controlling is made in accordance with pulse signals from pulse oscillators 18 ... . Direction of flow in the line is controlled by a number of reels 19 ... .

In such a continuous coating process, the weld seams must be correctly detected in order that high quality of products is maintained. If some fault occurs in any of the sensors 17, ... , reels 19, ... , the processing stations 12, 13, 14, and 15, and the controlling computer (not shown) and a measurement error is thereby produced, the steel roll is spoiled. So far, specialists have been taking care of the diagnoses, but because there are many component parts in the line, it is quite difficult to find the faulty portion from abnormal conditions without having considerable experience.

In the prior art system as shown in Fig. 2, host transmission 21 is executed between the system and a computer (not shown) mounted in an on-line system 20, and the system keeps control of continuous processing, i.e., tracking control 23, and makes automatic setting and control 24 in the molten zinc coating process 10, but on the other hand, the system is also adapted to allow manual setting and control 25 to be made by operating the above described expert system. The manual setting and control 25 is carried out, through a keyboard 26 and display device 27, by the operator who types certain computer language on the keyboard 26 while referring to a display of the tracking made on the display device 27, in an interactive manner.

Operations for the mentioned manual setting and control 25 will be described. The position where abnormality is produced, cause of the trouble, a measure to be taken, etc. are input through the keyboard 26 so that a dialogue is continued with the computer through the host transmission 21, the on-line system 20, etc. and a diagnosis is executed based on the inference steps taken by the computer. The computer applies certain rules responding to the input made by manual operation of the keyboard 26. The rules are combinations of the condition of trouble, intermediate hypothesis, and conclusion expressed in the form of "IF ∿ THEN ... ". There are approximately 200 rules in the prior art system. As the computer, a large size computer of U.S. IBM, "IBM 3084", is used in a time sharing system (TSS), a system enabling multiple programs to be executed concurrently, and as the AI tool, software by the name of "BRAINS" supplied from Toyo Joho System Company (Oriental Information System Company, whose Head Office is in Suita City, Osaka Prefecture) is used. The time period required for the inference process in the system is approximately 5 seconds, and therefore, a diagnosis can be made at a practically sufficient speed.

However, in the prior art troubleshooting system for use in plants, there were some problems such as that the operations for the diagnosis had to be made by operating input means such as the keyboard while referring to the display, and since the input operations had to be made using such special purpose program language for AI as, for example, "LISP" and "PROLOG", or such general purpose program language as "FORTRAN", or based on some AI application system development support software, it was rather troublesome to understand the operating manual of such means and it was not possible to have the system generalized or made applicable to general purposes.

There was also such a problem that it was obscure to which control process in the actual plant operations the rules for operating procedure or the like displayed on the display device was corresponding, and because of this obscurity of correspondence to the actual plant activities, it was unable to attain an appropriate operation.

Further, in such a troubleshooting system for use in the plant in highly specialized field, there was a problem that the number of the rules for troubleshooting was not large enough, and besides, the revision of the rules was not made so frequently, and therefore, there was insufficiency on the side of the program and much time was required for expansion of the program.

## SUMMARY OF THE INVENTION

An object of the present invention is the provision of a knowledge-based apparatus for troubleshooting employing an image for use in a plant which can be easily operated to trace a fault by an inexperienced engineer who has no knowledge about the program language of the computer and has no special technical knowledge about the plant as the object of the control.

Another object of the present invention is the provision of a troubleshooting system which simplifies and facilitates the operation for inputting data to the computer and enables the process controlling operations in the plant to be accurately executed by easy and quick processing.

A further object of the present invention is to enable a user who has no knowledge at all about software of the AI tool or the like to make a diagnostic operation according to a predetermined program and to enable any user easily to use the expert system.

In order to achieve all the above mentioned objects at a single stroke, the knowledge-based troubleshooting apparatus employing an imade for use in a plant according to the present invention comprises a computer including a knowledge base involving information from long years of experience of experts in the special technical field relative to the plant, a video disk device for reproducing, in response to an output of the computer, an image data about operating procedure in which the operating procedure based on the knowledge base is turned to images, in succession on the screen of the display device, a touch plate disposed on the front face of the screen of the display device for enabling selection by the operator as to the operating procedure to be input to the computer in such a way that when a portion where an operating menu is displayed in the image data for troubleshooting is touched by the operator the computer is caused to issue an output instruction for next image data, and a superimposer for outputting superimpose data from the computer to the video disk device involving the image data, as the computer executes in succession the troubleshooting operations in the plant according to the selections as to the operating procedure input through the touch plate.

## BRIEF DESCRIPTION OF THE DRAWINGS

Fig. 1 is a block diagram showing an example of a general knowledge-based expert system;

Fig. 2 is a block diagram showing an example of a prior art knowledge-based diagnostic system applied to a molten zinc coating line in a steel making plant;

Fig. 3 is a block diagram showing an embodiment of a knowledge-based troubleshooting apparatus employing an image for use in a plant according to the present invention; and

Fig. 4 is a front view showing a display device and a touch sensor panel for the troubleshooting apparatus according to the embodiment of Fig. 3.

## DETAILED DESCRIPTION OF THE PREFERRED EMBODIMENTS

A preferred embodiment of a troubleshooting apparatus employing an imade for use in a plant according to the present invention will be described below in detail with reference to the accompanying drawings.

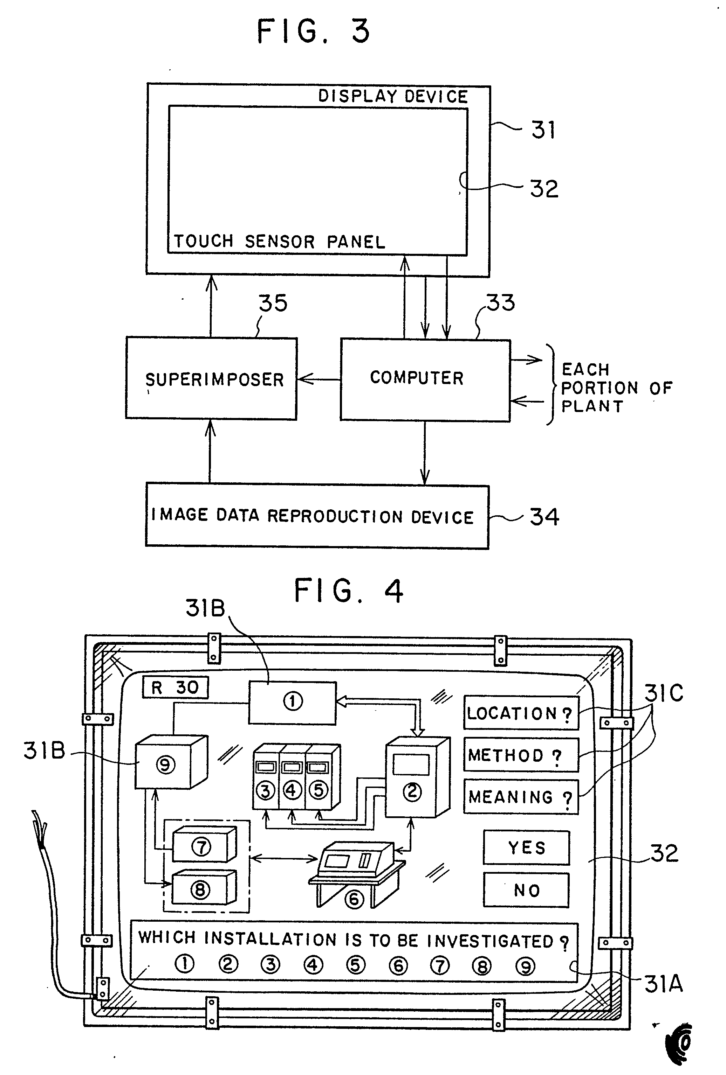

Fig. 3 is a block diagram schematically showing general arrangement of an embodiment of the present invention, wherein the troubleshooting apparatus is made up of a cathode ray tube (CRT), a liquid crystal display (LCD), and others, or more particularly comprises display means 31 for which a television receiver may also be appropriated, a touch sensor panel 32 attached onto the front face of the display screen of the display device 31, a computer 33 which is connected with each of the display device 31 and the touch sensor panel 32, which is also connected to detection means and control means at necessary portions of each process of the plant as the object of supervisory, which stores as plural kinds of AI tools control programs corresponding to the type of the plant as the object of supervisory expressed in a procedure-oriented language of such a form as "IF ∿ THEN ... ELSE ... " such that when a fault is found inference steps are taken to provide an answer based upon these AI tools, and which includes as hardware input and output interface, memory, arithmetic and logic unit such as CPU, an image data reproduction device 34 such as, for example, a video disk device (an optical disk device or magnetic disk device), video tape reproduction device, or the like, which is connected to the computer 33 and reproduces responding to an instruction from the computer 33 image data in which the installations in the plant where faults are possible to be produced are turned to an image so as to be seen at a glance, and a superimposer 35 for outputting the rule data from the computer 33, which are data for the inference process for troubleshooting turned to character data, to the display device 31 so that the data may be displayed on the screen of the display device 31 superimposed on the display of the image data of individual installations of the plant displayed thereon based on the inputs from the computer 33 and the image data reproduction device 34.

As the touch sensor panel 32, there is one that is manufactured by Carroll Touch International Limited and this is an auxiliary input means used when inputting necessary positional data without using a general input device such as the keyboard and card input device. The touch sensor panel 32 is formed of a glass substrate and a transparent resin plate stuck together. While conductive thin films are coated at the portions corresponding to selectable images displayed on the display device 31, there are provided by evaporation common electrodes on the glass substrate, whereby it is adapted such that the portion pressed by a fingertip or the like becomes a selected portion to be equivalent to a key 31C, ... by taking on certain electric capacity causing a signal for the pressed portion to be outputted to the computer 33. When the portion equivalent to a key 31C in a menu, etc. on the screen of the display device 31 is touched by a finger, the electric capacity at that portion is changed and the oscillation voltage is thereby varied. By detecting the envelope thereof and decoding the same into an X-Y signal corresponding to that position, the selected positional data is obtained. The touch sensor panel provides not so accurate positional data as a tablet, digitizer, and the like, but it is useful when the software is devised appropriately. As the superimposer, for example, the Model FS-1000 manufactured by PHOTRON Co., Ltd. can be mentioned.

Operations of the troubleshooting apparatus constructed as above will be described in the following.

In the image data reproduction device 34 made up of a video disk device or the like, there is loaded with a record medium with troubleshooting procedures based on knowledge and know-how of experts as to the troubleshooting in the plant as the object of control turned to image data recorded thereon. In a system for troubleshooting for use in a power plant, for example, there are stored all such data turned to signals as image data indicating the entire power installations expressed in various symbols 31B and image data (not shown) considered necessary in troubleshooting by the experts about external appearance of the console panel, circuit configurations within the console panel, relays, chassis cards, and components.

In the memory (not shown) of the computer 33, there are stored the above mentioned rules as data for the inference process. The rules are expressed in the form of inference as "IF ∿ THEN ... ". By combining these rules and providing them with solutions in succession, the answer to the problem to be solved, i.e., the cause of the found fault, is easily cleared up.

More concretely explaining the operations, if a fault is produced in the plant, the operator looking at the screen of the display device 31 selects the item corresponding to the contents of the fault with the touch sensor panel 32. There is provided an area for dialogue 31A in the image displayed on the screen as shown in Fig. 4, and in the area for dialogue 31A are displayed the items to be questioned to clear up the cause of the fault, i.e., the above mentioned rules, in the form of sentence. At this time, the computer 33 prepares the item for inference to be concluded in the next place according to the answer to the questioned item, whether "YES" or "NO", and displays in the sentence form the item to be concluded next according to the answer selected by the operator, and such steps are taken in succession. The display of the rules in the area for dialogue 31A is superimposed on the above described image by the superimposer 35, in response to the instruction from the computer 33, outputting the data to the area for dialogue 31A in the image called R-30, for example, as shown in Fig. 4.

In inquiring into the cause of the fault or the like, if there is found some portion incomprehensible for the operator in the item to be investigated, e.g., in the place to be investigated, method for investigation, or word used, the operator can press the corresponding portion in the touch sensor panel 32 on the screen, and further, press one of the portions displayed in the area for dialogue relative to the selected item of "LOCATION", "METHOD", or "MEANING" displayed on the right-hand side of the screen. For example, to the question "Which installation is to be investigated?", if a number indicated by lighting or the like out of the numbers ① - ⑨ for the symbols 31B displayed on the screen is pressed, then, for example, such a question as "In which method is it to be investigated?" is prepared. By answering such questions in succession, the location of the fault in the plant, its cause, measures to be taken, etc. can be cleared up from specialized point of view.

Thus, by establishing new rules in the knowledge base within the computer 33 in the form of "IF ∿ THEN ..." by using a certain program language and storing the image data for the new rules in an optical disk, video tape, or the like, it is enabled to quickly meet the requirements for revision or addition in accordance with aging of the plant or addition of new facilities to the plant. If a new plant is similar in constitution to an existing plant, the rules for the new plant can be readily provided by revising the existing rules. Such addition, deletion, or revision of the rules as the AI tools can be easily executed from a peripheral device connected to the computer.

As a concrete example of the image data reproduction device among the above components, there is a video disk device such as a magnetic disk device or an optical disk device. The magnetic disk device reproduces the image data as an electric signal by means of a head from a magnetic disk which the image data is recorded on the disk surface as differences in the directions of magnetization. The optical disk device reproduces the image data as an electric capacity by means of a laser beam from an optical disk. The surface of the optical disk is coated with a thin film of a metal of low melting point or a thin film of a plastic polymer in which metallic powder is dispersed.

Further, as a concrete example of the display device among the above components, there is a cathode ray tube (CRT) display device as an active display which is a receiver for use in the existing television receiving system. As another concrete example of the display device, there is a liquid crystal display (LCD) device as a passive display which uses nematic liquid crystal changing its optical property when subjected to a light beam, whereby an image by modulation of the light transmitted through the liquid crystal is displayed. As a concrete example which is different from above-mentioned example, there is a plasma display panel (PDP) in which a gas such as neon is confined in a space lattice made up of various minute-space putting in matrix order. PDP is displaying the image data by means of plasma luminescence in which a confined gas is discharged by impressed voltage through electrodes arranged in both ends of the space lattice.

Although in the above described embodiment, the image data reproduction device 34 was imagined to be a vide disk device and the image data displayed was considered to be a still picture, the present invention is not limited to such, but animated pictures may be displayed having the dialogue made applicable thereto, or improvement may be made by adding sound to the still or animated pictures so that the dialogue may be made more smoothly.

And, although the above described embodiment was stated as if it were applicable only to the diagnostic purpose, the same may be used also for other purposes such as training.

According to the troubleshooting apparatus using an image for use in a plant as described in detail so far, the expert system is employed therein and a dialogue is held between the apparatus and the operator in accordance with a knowledge base and inference steps are taken based on the knowledge base, and the operator is enabled to make the troubleshooting only by touching the relevant portions in the displayed image through the touch sensor panel while referring to the image data displayed on the display device and the character data superimposed on the image during the course of the dialogue. Therefore, even a nonspecialist is enabled to make troubleshooting in the maintenance work of a plant which requires highly specialized knowledge.

And, in tracing a fault through the dialogue with the computer the operator need no specialized knowledge about computer operation, such as knowledge about the computer language, knowledge about the AI tool, and a manual for operating procedure of the computer. Only in this respect, it can be said that an apparatus providing a quick troubleshooting operation and easy handling has been made available.

Further, since any person is enabled with ease to make process control in a plant, this invention also contributes to improvement in the reliability on the plant.

**Claims**

1. A knowledge-based apparatus for troubleshooting employing an image for use in a plant comprising:

a computer including a knowledge base as a file of highly specialized technical knowledge about the plant and an inference engine for inferring based on the knowledge base the occurrence, location, and cause of trouble in each of the installations constituting the plant, method for eliminating the cause of trouble and the substance of the action to be taken;

an image data reproduction device with a recording medium loaded therein on which images describing the overall arrangement of the plant and individual installations thereof are recorded for outputting image data based on operations for troubleshooting and according to an instruction from said computer;

a display device in response to output from said reproduction device based on the output instruction from said computer for displaying an image necessary for the troubleshooting including an area for dialogue therein;

a superimposer based on inference steps taken by said computer for outputting character or pattern data so as to be displayed in the area for dialogue in the image data from said reproduction device superimposed on the displayed image; and

a touch sensor panel attached onto the front face of the display screen of said display device as an input device for enabling inference operations for troubleshooting to be developed in succession by outputting a certain electric capacity upon touching thereon of the fingertip of the operator thereby inputting a signal as to on what position the touching was made to said computer.

2. An apparatus for troubleshooting according to claim 1, wherein:

said image data reproduction device is made up of a video disk device including a certain recording medium on which the layout of the installations of the entire plant as the object of supervisory, layouts and connection diagrams of machines and equipment mounted in each individual installation, and flow charts down to the locating of the cause of fault in the plant are stored.

3. An apparatus for troubleshooting according to claim 2, wherein:

the video disk device as said image data reproduction device is made up of a magnetic disk device for reproducing by means of a head said image data as an electric signal from a magnetic disk having said image data recorded on the disk surface as differences in the directions of magnetization.

4. An apparatus for troubleshooting according to claim 2, wherein:

the video disk device as said image data reproduction device is made up of an optical disk device for reproducing said image data as an image by detecting by means of a laser beam said image data as electric capacity from an optical disk having said image data recorded as small pits made by a laser beam in a thin film of a metal of low melting point or of a plastic polymer in which metallic powder is dispersed applied to the disk surface.

5. An apparatus for troubleshooting according to claim 1, wherein:

said display device is made up of a cathode ray tube (CRT) display device as an active display for reproducing an image by scanning an electron beam output in accordance with an electric signal converted from said image data.

6. An apparatus for troubleshooting according to claim 5, wherein:

said CRT display device is made up of a receiver for use in the existing television receiving system.

7. An apparatus for troubleshooting according to claim 1, wherein:

said display device is adapted to output a light beam in accordance with an electric signal converted from said image data and includes a liquid crystal display device as a passive display which uses a nematic liquid crystal changing its optical property when subjected to the light transmitted through the liquid crystal is displayed.

8. An apparatus for troubleshooting according to claim 1, wherein:

said superimposer also functions as an output control device for controlling the image output from said image data reproduction device and image output for character or pattern as data for the inference from said computer.

9. An apparatus for troubleshooting according to claim 1, wherein:

said touch sensor panel is formed of a transparent glass substrate and a resin plate stuck together, shaped in the form of the front face of the screen of said display device, and provided with conductive thin films evaporated between said glass substrate and resin plate corresponding to input selection menu or graphic keyboard displayed on said screen.

10. An apparatus for troubleshooting according to claim 9, wherein:

said touch sensor panel is provided with a common electrode in each key region of said input selection menu or graphic keyboard of the thin films evaporated in said touch sensor panel for generating a certain value of oscillation voltage when the key region is touched by the fingertip of the operator.

11. An apparatus for troubleshooting according to claim 9, wherein:

said touch sensor panel includes a region to display thereon as an image the layout of the plant as the object of supervisory, internal construction of each of individual installations, and image data as to substance of causes of fault as well as common electrodes of evaporated conductive thin film corresponding to keys of selection input menus such as "Location", "Method", "Meaning", "YES", and "NO" displayed on regions of the screen, other than said area for dialogue indicating therein certain items or rules based on the inference steps taken by said computer, whereby it is adapted such that certain oscillation voltage is output to said computer when a portion equivalent to a key is touched by the fingertip of the operator.

# FIG. 1

SP

K·E

K·E INTERFACE 6

EXTERNAL SYSTEMS

INTERFACE FOR EXTERNAL SYSTEMS 9 — 8

9 — DATA BASE 9a, SENSOR 9b, OTHER EXPERT SYSTEMS 9c

SYSTEM NUCLEUS 1

INFERENCE ENGINE 3

KNOWLEDGE BASE 2

CONTROL SYSTEM 4

EXPLANATORY MECHANISM 5

INTERFACE FOR GENERAL USERS 7

0 258 553

# FIG. 2

0 258 553

# FIG. 3

DISPLAY DEVICE ~ 31

32

TOUCH SENSOR PANEL

35 SUPERIMPOSER

33 COMPUTER → EACH PORTION OF PLANT

34 ~ IMAGE DATA REPRODUCTION DEVICE

# FIG. 4

31B

R 30

① 31C

LOCATION ?

METHOD ?

MEANING ?

31B ⑨

③ ④ ⑤

②

⑦

⑧

⑥

YES

NO

32

WHICH INSTALLATION IS TO BE INVESTIGATED ?

① ② ③ ④ ⑤ ⑥ ⑦ ⑧ ⑨

31A